# EUROPEAN PATENT APPLICATION

(11) **EP 1 681 631 A1**
(43) Date of publication of application: **19.07.2006**
(21) Application number: 05425009.7
(22) Date of filing: 13.01.2005
(51) Int. Cl.: G06F 11/07, G06K 19/07, H04L 12/28

(54) **System for monitoring operation of a wide-band network communication device**

(71) Applicant: Telsey S.p.A., 31055 Quinto di Treviso (IT)
(72) Inventor: Segato, Francesco, 35030 Sarmeola di Rubano (IT); Maschio, Giordano, 31050 Monastier (IT); Bovo, Fabio, 30035 Mirano (IT)
(74) Representative: Jorio, Paolo

(57) **Abstract**

A wide-band communication device (2) connectable to a wide-band network (3) to receive data coding wide-band services, and to supply the data to at least one external peripheral device (10) implementing wide-band service operations; the communication device (2) having an internal diagnosis module (11), which in turn has a memory stage (13) for storing diagnosis information relative to the operating state of the communication device (2), and a communication stage (14) which, on command, sends a wireless communication, containing the diagnosis information stored in the memory stage (13), to an external reading device (4).

## Description

The present invention relates to a system for monitoring operation of a wide-band network communication device.

More specifically, the present invention relates to a system for monitoring and diagnosing operation of a wide-band network communication device, such as an IP-video station, set top box, networking device, residential gateway, or network access gateway, to which the following disclosure refers purely by way of example.

As is known, wide-band communication devices, such as residential and/or access gateways, are electronic devices, which exchange data at high speed with a communication network to receive, over the network, data coding information relative to so-called "wide-band" services, such as voice, video, home automation and/or other similar wide-band services.

In recent times, progress in technology and the increasingly wide range of functions made available by last-generation wide-band services have brought about a parallel increase in the complexity of wide-band communication devices, both as regards internal circuit architecture (hardware) and the software coding the operations controlling and supervising operation of the devices.

The hardware architecture/software of the above devices has now reached such a degree of complexity as to make any diagnosis of malfunctions to which the devices are subject extremely difficult.

In the event of a breakdown of the communication device, service engineers are faced with the enormous problem of rapidly "tracking" the operations performed by the device prior to the breakdown, and analyzing the operations to determine the cause of the breakdown and repair the device "in field".

Unfortunately, the complex circuitry and software of current communication devices, and the fact that they are completely disabled in the event of a breakdown, in most cases rule out any possibility of in-field repair. In which case, the device must be taken away for repair at a specialized service centre where, using dedicated diagnostic equipment, circuit-software measurements and tests are conducted to determine the cause of the breakdown.

The impossibility of performing in-field repairs obviously increases device repair time, is an inconvenience to both the user and wide-band service providers, and greatly increases service costs.

It is an object of the present invention to provide a fast, straightforward system designed to fully diagnose malfunctioning of a wide-band network communication device, and which at the same time is cheap and easy to produce.

According to the present invention, there is provided a wide-band network communication device as claimed in Claim 1.

According to the present invention, there is also provided a system for monitoring operation of a wide-band network communication device, as claimed in Claim 13.

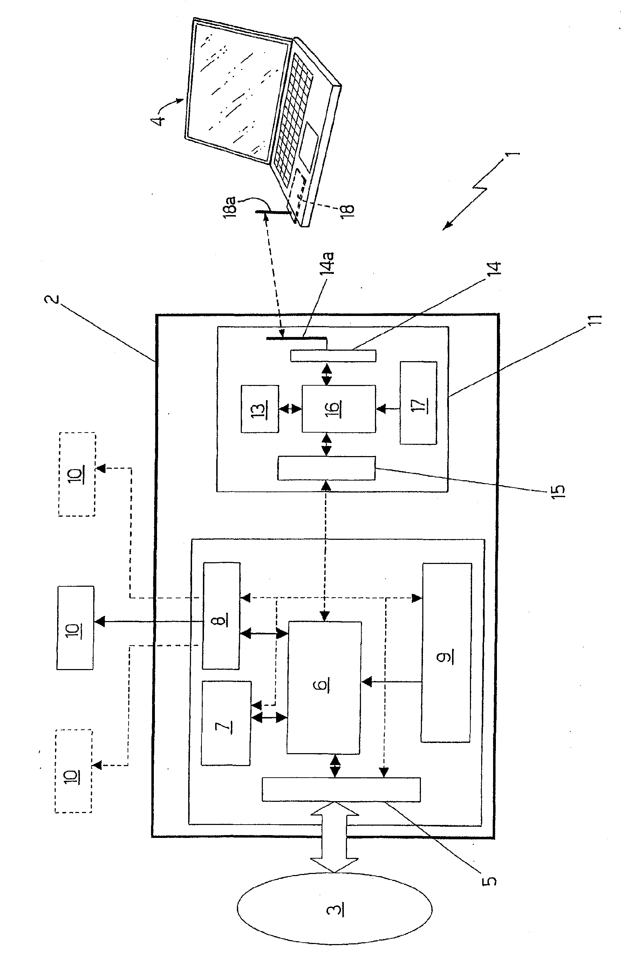

The present invention will be described with reference to the accompanying drawing, which shows a schematic of a non-limiting embodiment.

Number 1 in the accompanying drawing indicates as a whole a monitoring system substantially comprising a communication device 2 connectable to a wide-band network 3 with which it exchanges data coding one or more "wide-band" services; and at least one reading device 4 wireless connected to communication device 2, from which it receives information (described in detail below) relative to the operating state or malfunctioning of communication device 2.

Communication device 2 communicates with wide-band network 3, to perform standard high-speed voice, data, INTERNET, INTERNET VIDEO transmission and reception etc., over a communication channel with a data transmission speed of roughly 1 Mbps or more.

In the example shown, communication device 2 comprises at least one electronic communication block 5 connectable to at least one wide-band network 3 to permit data exchange between communication device 2 and wide-band network 3 in accordance with a predetermined communication protocol. More specifically, wide-band network 3 comprises an IP (Internet Protocol) communication network, and electronic communication block 5 may be defined by any wide-band communication module capable of communicating with the network in accordance with a standard communication protocol, such as FTTH, ETTH, ADSL, xDSL or similar.

Communication device 2 also comprises an electronic data processing block 6 defined, for example, by a microprocessor capable of performing various operations supervising operation of communication device 2; and an electronic memory block 7 defined, for example, by a flash memory, in which information relative to the data and operations implemented by electronic data processing block 6 is stored.

In the example shown, electronic memory block 7 may store, for example, the operating system file system and kernel, wide-band communication protocol implementation programs (e.g. the TCP/IP, AAL5, ATM, ADSL stack), and one or more application programs enabling communication device 2 to perform the various wide-band service functions during normal operation.

Communication device 2 also comprises an electronic peripheral interface block 8, to which are connectable one or more peripheral devices 10, each for receiving data coding a specific wide-band service. In the example shown, electronic peripheral interface device 8 is defined by an electronic module having a number of ports (not shown) to which the various peripheral devices 10 (some shown schematically by dash lines) are connectable, and which selectively directs to each port data coding wide-band services such as: IP Telephony, Fast Internet, IP-Videostreaming, Video on Demand, remote home automation services, home-office security control services, remote office services, Security Video. Each peripheral device 10 connectable to electronic peripheral interface block 8 may therefore be defined by a telephone, a set top box, and/or any other device or electronic equipment capable of implementing and providing the user with the functions and services made available over wide-band communication network 3.

In the example shown, communication device 2 also comprises an electronic power block 9, which preferably, though not necessarily, comprises a known electronic power unit connected by power circuits (not shown) to electronic blocks 5-8 of communication device 2 to supply blocks 5-8 with the necessary operating voltage/current.

Unlike known communication devices, communication device 2 also comprises an internal diagnosis module 11 for instantaneously checking or diagnosing the operating state of electronic blocks 5-9, and which stores the diagnosis information for wireless transmission, on command, to external reading device 4.

More specifically, internal diagnosis module 11 cooperates with electronic processing block 6 and/or electronic memory block 7 to acquire information and parameters relative to the operating state of electronic blocks 5-9, and stores the acquired information and data for transmission, on command, to external reading device 4.

In the example shown, internal diagnosis module 11 substantially comprises a memory stage 13 for storing the data and diagnosis information relative to the operating state of electronic blocks 5-9 and/or information relative to the operations performed by communication device 2; and a communication stage 14 for transmitting the information stored in memory stage 13 to external reading device 4.

More specifically, the information stored in memory stage 13 may comprise operating parameters of electronic blocks 5-9, such as: the voltage/current supplied by electronic power block 9 to each electronic block 5-8; the speed at which data is transmitted/received to/from wide-band network 3 by electronic communication block 5; access to electronic memory block 7; information concerning data communication between electronic peripheral interface block 8 and peripheral devices 10, etc.

The information stored in memory stage 13 may also comprise a detailed list (log files) of operations performed by electronic processing block 6; and/or the Stack Point value; and/or information relative to the last access to electronic memory block 7; and/or information relative to the last reset by communication device 2.

In addition to the above information, memory stage 13 may preferably, though not necessarily, also comprise additional information concerning parameters relative to the hardware and software technical characteristics of communication device 2. In the example shown, additional information may comprise : a maker identification code; an identification code of communication device 2; a code indicating the software type and/or version installed; software updating type and dates; device installation date; device servicing or repair history; a MAC address code (for "remote" identification of electronic communication block 5 over wide-band network 3); type of equipment; device manufacture and transport information (e.g. manufacturing and transport date and lot number of communication device 2).

In the example shown, communication stage 14 is defined by a transmitting-receiving module for "short-range" radio-frequency communication, via an antenna 14a and in accordance with a known standard communication protocol, e.g. Bluetooth or similar, with a transmitting-receiving module forming part of external reading device 4.

In the example shown, diagnosis module 11 also comprises an interface circuit stage 15; and, preferably, though not necessarily, a control stage 16 for : coordinating internal communication, via interface circuit stage 15, with electronic processing block 6 to acquire diagnosis information and/or additional information; controlling acquired information storage in memory stage 13; and activating, on command, transmission of stored information to reading device 4.

More specifically, interface circuit stage 15 allows control stage 16 to acquire information relative to the operating state of each of electronic blocks 5-8 of communication device 2.

In an alternative embodiment, diagnosis module 11 has no control stage 16, and memory stage 13 is accessed directly by electronic data processing block 6, which stores or updates diagnosis information instant by instant in memory stage 13.

Diagnosis module 11 also comprises an additional power stage 17, which is independent of electronic power block 9 and supplies voltage/current to stages 13-16.

More specifically, power stage 17 provides for making diagnosis module 11 fully independent energy-wise from electronic power block 9, so that, in the event communication device 2 is disabled (e.g. voltage/current supply by electronic power block 9 is cut off), diagnosis module 11 can continue operating to transmit the diagnosis information required by external reading device 4.

Power stage 17 may be defined by a battery, e.g. a rechargeable battery, which, in use, is preferably, though not necessarily, connected electrically by a charge control circuit (not shown) to, and recharged by, electronic power block 9.

In an alternative embodiment, power stage 17 comprises a remote power device for powering stages 13-16 with energy obtained from the radio-frequency signals transmitted by reading device 4. In other words, in this case, power stage 17 of diagnosis module 11 is defined by a passive device, which, on receiving an enabling signal, switches from a rest condition to a receive condition to receive the radio-frequency signals, which are appropriately converted to electrical energy to power stages 13-16. Remote power systems are known and therefore require no further description.

In the example shown, reading device 4 comprises a data transmitting-receiving module 18 (shown by the dash line) which, via an antenna 18a, transmits a radio-frequency signal coding a command enabling information transmission by diagnosis module 11. More specifically, in use, on receiving the enabling signal, diagnosis module 11 transmits the data and diagnosis and/or additional information stored in memory stage 13 to reading device 4.

Reading device 4 also comprises a processing module (not shown) which processes the information received by data transmitting-receiving module 18 to show the results of the check or diagnosis of hardware and/or software operation of electronic blocks 5-9 of communication device 2, and/or data relative to its life cycle.

Reading device 4 may conveniently be defined by a conventional personal (e.g. portable) computer, or by any other similar electronic processing device, which has a data transmitting-receiving card 18 capable of implementing the same communication protocol as communication stage 14, and which can implement a series of known processing algorithms on the diagnosis information stored and transmitted by diagnosis module 11.

In actual use, during operation of communication device 2, control stage 16 of diagnosis module 11 memorizes, instant by instant in memory stage 13, the data and diagnosis information relative to the operating state of electronic blocks 5-9. At this phase, diagnosis module 11 therefore provides for gathering information and data relative to both the operating state and the operations performed by each electronic block 5-9.

In the event of a malfunction of communication device 2, or if specific information relative to identification or the life cycle of communication device 2 is required, diagnosis module 11, on receiving the enabling signal, transmits the information stored in memory stage 13 to reading device 4 via communication stage 14.

At this phase, external reading device 4 may obviously transmit signals to diagnosis module 11 specifying the type of information required. That is, diagnosis module 11 may transmit all or only a specific part of the information that has been gathered and stored. For example, reading device 4 may only request information dealing with diagnosis of communication device 2, or may request additional information by which to identify or trace communication device 2. The information to be supplied (to the service engineer) may obviously be selected directly by reading device 4 via a series of operations for filtering the selected information.

In connection with the above, it should be pointed out that diagnosis module 11 may advantageously be built with RFID (Radio Frequency Identification) circuit architecture, which permits radio-frequency transmission of the stored diagnosis and/or additional information from diagnosis module 11 to reading device 4.

More specifically, internal diagnosis module 11 may be defined by a transponder (e.g. TAG) integrating power stage 17; memory stage 13; communication stage 14 communicating in radio-frequency with reading device 4; and interface circuit stage 15 by which electronic processing block 6 activates the "write" operations to modify or update the information in memory stage 13 instant by instant. The transponder is obviously rewritable, i.e. memory stage 13 is defined by a rewritable memory sized to accommodate the necessary diagnosis and additional information.

The transponder defining diagnosis module 11 may be an active type, i.e. for continuously powering the relative circuits (e.g. by means of a battery), or a passive type, in which power stage 17 remote-powers the circuits and components by means of the radio-frequency signals transmitted by reading device 4.

The transponder defining diagnosis module 11 may obviously also be a "semipassive" type, in which power stage 17 comprises a power battery, which remains idle until diagnosis module 11 receives the enabling signal transmitted by reading device 4. Transponders are known devices, and therefore require no further description.

Besides being extremely straightforward and therefore cheap to produce, system 1 as described above has the advantage of acquiring or maintaining, in any condition, i.e. even when communication device 2 is completely disabled, a complete "trace" of the information characterizing operation of communication device 2 prior to a breakdown.

Service engineers are thus able to operate "in field", i.e. where communication device 2 is installed, to determine the cause of the breakdown, thus drastically reducing repair time by eliminating the need to transfer communication device 2 to a specialized service centre.

In fact, by processing the diagnosis information gathered and transmitted by diagnosis module 11, service engineers are able to determine and analyze the cause of the breakdown of communication device 2 more or less immediately, with no need to open rigid protective casings to examine and test the integrated circuits of electronic blocks 5-9.

Moreover, the additional information stored in memory stage 13 and transmittable to reading device 4 permits a full trace of the life cycle of the communication device, and simpler, faster, complete identification of the communication device in terms of warranty period, maker, and transport lot, which is vital information for simplifying procedures governing the manufacture, marketing, and servicing of communication devices 2.

Finally, a diagnosis module in the form of an active, passive, or semipassive transponder is much cheaper to produce, and so greatly reduces the cost of monitoring and servicing communication devices 2.

Clearly, changes may be made to the system and device as described and illustrated herein without, however, departing from the scope of the present invention.

In particular, in a variation not shown, as opposed to radio-frequency communication modules, wireless communication of information between diagnosis module 11 of communication device 2 and reading device 4 is performed using infrared communication devices preferably operating in accordance with the IrDA (Infrared Device Application) protocol or any other similar standard protocol. More specifically, the infrared communication devices are integrated, for "short-range" wireless communication, in communication stage 14 of diagnosis module 11 and in reading device 4 respectively.

## Claims

1. A wide-band communication device (2) connectable to a wide-band network (3) to receive data coding wide-band services, and to supply the data to at least one external peripheral device (10) implementing a wide-band service; said communication device (2) being **characterized by** comprising an internal diagnosis module (11), which in turn comprises memory means (13) for storing diagnosis information relative to the operating state of said communication device (2), and communication means (14) which, on command, send a wireless communication, coding the diagnosis information stored in said memory means (13), to an external reading device (4) .

2. A communication device as claimed in Claim 1, **characterized by** comprising at least one processing block (6) implementing a series of operations supervising operation of the communication device (2); at least one memory block (7) containing information relative to the data and operations implemented by said at least one processing block (6); and a power block (9) for supplying voltage/current to said processing block (6) and said memory block (7); said memory means (13) of said internal diagnosis module (11) memorizing, instant by instant, diagnosis information relative to the operating state and/or to the operations performed by said processing block (6) and/or by said memory block (7) and/or by said power block (9).

3. A communication device as claimed in Claim 1 or 2, **characterized in that** said internal diagnosis module (11) comprises a voltage/current power stage (17) separate from and independent of said power block (9), and for powering said communication means (14) and said memory means (13).

4. A communication device as claimed in Claim 3, **characterized in that** said power stage (17) of said internal diagnosis module (11) comprises at least one battery.

5. A communication device as claimed in Claim 3, **characterized in that** said power stage (17) of the internal diagnosis module (11) comprises remote power means for obtaining, from the signals transmitted by said external reading device (4), electrical energy for supply to said internal diagnosis module (11).

6. A communication device as claimed in any one of Claims 2 to 5, **characterized in that** said processing block (6) commands writing and storage of said diagnosis information in said memory means (13).

7. A communication device as claimed in any one of the foregoing Claims, **characterized in that** said internal diagnosis module (11) comprises processing means (16) which command writing and storage of said diagnosis information in said memory means (13).

8. A communication device as claimed in any one of the foregoing Claims, **characterized in that** said memory means (13) store additional information relative to the life cycle trace of said communication device (2); said communication means (14) of the internal diagnosis module (11) transmitting said additional information, on command, to said external reading device (4).

9. A communication device as claimed in any one of the foregoing Claims, **characterized in that** said wireless communication between said communication means (14) of said internal diagnosis module (11) and said external reading device (4) is a radio-frequency communication.

10. A communication device as claimed in any one of Claims 1 to 8, **characterized in that** said wireless communication between said communication means (14) of said internal diagnosis module (11) and said external reading device (4) is an infrared communication.

11. A communication device as claimed in Claim 9, **characterized in that** said internal diagnosis module (11) is of RFID circuit architecture.

12. A communication device as claimed in Claim 11, **characterized in that** said internal diagnosis module (11) is defined by a transponder.

13. A system for monitoring operation of a wide-band network communication device; said system being **characterized by** comprising a wide-band network communication device (2) as claimed in any one of the foregoing Claims; and at least one external reading device (4) which employs wireless communication with said communication device (2) to receive diagnosis information relative to the operating state of the communication device (2).

14. A system as claimed in Claim 13, **characterized in that** said wireless communication is radio-frequency communication.

15. A system as claimed in Claim 13, **characterized in that** said wireless communication is infrared communication.

16. A system as claimed in any one of Claims 13 to 15, **characterized in that** said external reading device (4) comprises an electronic computer.
